# EUROPÄISCHE PATENTSCHRIFT

(11) **EP 0 879 775 B1**
(45) Veröffentlichungstag und Bekanntmachung des Hinweises auf die Patenterteilung: **08.03.2000**
(21) Anmeldenummer: 98107973.4
(22) Anmeldetag: 30.04.1998
(51) Int. Cl.: B65G 47/61, B65G 47/88

(54) **Vereinzelungsvorrichtung**
Separating device
Dispositif de séparation

(30) Priorität: 21.05.1997 DE 29708968 U
(43) Veröffentlichungstag der Anmeldung: 25.11.1998
(73) Patentinhaber: Gärtner, Franz, 97656 Oberelsbach (DE)
(72) Erfinder: Gärtner, Franz, 97656 Oberelsbach (DE)
(74) Vertreter: Solf, Alexander, Dr.

(56) Entgegenhaltungen:
- EP-A- 0 700 849
- DE-U- 9 003 011
- US-A- 3 795 302
- US-A- 4 927 054
- US-A- 5 518 106

## Beschreibung

Die Erfindung betrifft eine Vereinzelungsvorrichtung zum Vereinzeln von auf Haken hängendem Gut, insbesondere eine Vereinzelungsvorrichtung zum Vereinzeln von Kleiderbügeln.

Aus dem Gebrauchsmuster DE 90 03 011 U1 ist eine Vereinzelungsvorrichtung zum Vereinzeln von Kleiderbügeln bekannt. Diese Vereinzelungsvorrichtung weist eine rohrförmige Schiene auf, die geneigt angeordnet ist. Die Kleiderbügel hängen hintereinander mit ihren Haken auf der Schiene und gleiten aufgrund der Schwerkraft, bis sie an einen Stopanschlag gelangen, der oberhalb der Schiene angeordnet ist. Gegen den Stopanschlag stauen sich die Haken in Reihe auf.

Ein stiftförmiges Vereinzelungsteil ist in der Schiene benachbart zum Stopanschlag vorgesehen. Das Vereinzelungsteil ist vertikal beweglich angeordnet und weist an seinem oberen Ende eine Spitze auf, mit welcher es von unten durch eine Öffnung in der rohrförmigen Schiene nach oben verschoben werden kann, so daß sich das Vereinzelungsteil zwischen dem unmittelbar am Stopanschlag anliegenden Haken und dem folgenden Haken der Reihe schiebt. Der unmittelbar am Stopanschlag anliegende Haken ist somit zwischen dem Stopanschlag und dem Vereinzelungsteil vereinzelt. Der Stopanschlag wird danach von der Schiene abgehoben, so daß der vereinzelte Kleiderbügel einzeln auf der Schiene nach unten weiter gleitet.

Bei dieser Vereinzelungsvorrichtung muß sowohl der Stopanschlag als auch das Vereinzelungsteil durch einen Mechanismus betätigt werden, wobei die Bewegungen des Stopanschlages und des Vereinzelungsteils miteinander synchronisiert sein müssen, um die Haken vereinzeln zu können.

Eine ähnlich arbeitende Vereinzelungsvorrichtung geht aus dem Gebrauchsmuster DE 87 16 024 U1 hervor, die wiederum einen Stopanschlag und ein Vereinzelungsteil aufweist, die von oben auf eine geneigte Schiene aufgesetzt werden, um Haken zu vereinzeln.

Der Erfindung liegt die Aufgabe zugrunde, eine Vereinzelungsvorrichtung zu schaffen, die sehr einfach aufgebaut ist und eine Vereinzelung von auf Haken hängendem Gut, insbesondere von Kleiderbügel gewährleistet.

Die Aufgabe wird durch eine Vereinzelungsvorrichtung mit den Merkmalen des Anspruchs 1 gelöst. Vorteilhafte Ausgestaltungen sind in den Unteransprüchen gekennzeichnet.

Die Erfindung wird beispielhaft anhand der Zeichnung näher erläutert. Es zeigen schematisch:

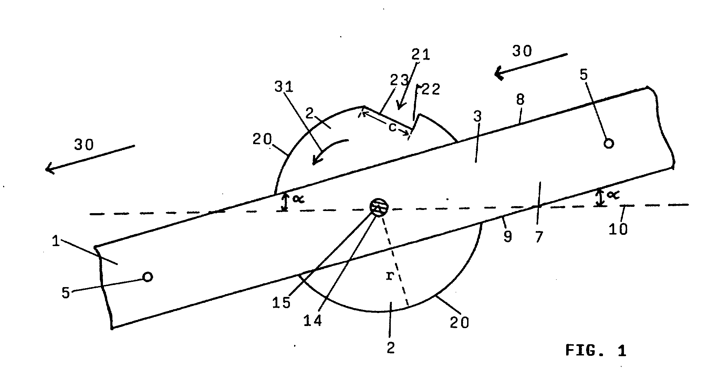

- Fig. 1: eine erfindungsgemäße Vereinzelungsvorrichtung in der Seitenansicht;

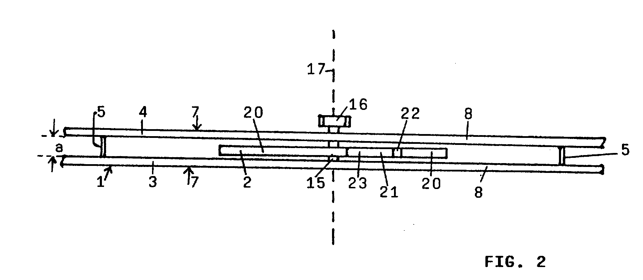

- Fig. 2: die in Fig. 1 gezeigte Vereinzelungsvorrichtung in der Draufsicht;
- Fig. 3: die in Fig. 1 gezeigte Vereinzelungsvorrichtung in der Seitenansicht, wobei zu vereinzelnde Haken schematisch dargestellt sind;
- Fig. 4a, 4b: eine weitere Ausführungsform der erfindungsgemäßen Vereinzelungsvorrichtung in der Seitenansicht, wobei die zu vereinzelnden Haken schematisch dargestellt sind.

Die erfindungsgemäße Vereinzelungsvorrichtung zum Vereinzeln von auf Haken hängendem Gut weist eine Schiene 1 und eine Vereinzelungskreisscheibe 2 auf.

Die Schiene 1 besteht aus zwei gleichen Schienenstegen 3, 4, die jeweils aus streifenförmigen, langgestreckten Metallflachstegen ausgebildet sind. Die Schienenstege 3, 4 sind zueinander parallel und mit vorbestimmtem Abstand a angeordnet, wobei sie mittels mehrerer Verbindungsstifte 5 miteinander verbunden sind, die sich zwischen den Schienenstegen 3, 4 erstrecken. Die Schienenstege 3, 4 weisen jeweils Breitseitenflächen 7 und eine obere und untere Längskante 8, 9 auf. Sie sind mit ihren Breitseitenflächen 7 vertikal angeordnet und schließen mit ihren Längskanten 8, 9 und einer Horizontalen 10 einen Neigungswinkel α von beispielsweise 10° bis 50°, vorzugsweise 20° bis 30° ein.

Der Abstand a zwischen den beiden Schienenstegen 3, 4 ist so bemessen, daß die beiden oberen Längskanten 8, die als Gleitkanten für einen Haken 12 dienen, in Querrichtung von dem Haken 12 übergriffen werden können, so daß der Haken 12 auf beiden Gleitkanten 8 aufliegt.

In den beiden Schienenstegen 3, 4 ist quermittig jeweils ein Loch 14 eingebracht. Die Löcher 14 sind einander gegenüberliegend angeordnet und eine Welle 15 ist in den beiden Löchern 14 drehbar gelagert. Die Welle 15 erstreckt sich horizontal zwischen den Schienenstegen 3, 4 und steht am Schienensteg 4 seitlich etwas vor. An dem seitlich vorstehenden Bereich der Welle 15 ist ein Antriebszahnrad 16 angebracht, an dem ein von einem Motor angetriebenes Zahnrad (nicht dargestellt) angreifen und die Welle 15 um deren horizontale Längsmittenachse 17 in Drehbewegung versetzen kann.

Auf der Welle 15 sitzt im Bereich zwischen den Schienenstegen 3, 4 die Vereinzelungskreisscheibe 2, die mittig von der Welle 15 durchgriffen wird und mit dieser drehfest verbunden ist. Die Vereinzelungskreisscheibe 2 weist einen Radius r, einen kreisbogenförmigen Rand 20 und zumindest eine zum Rand 20 offene Ausnehmung 21 auf. Die Ausnehmung 21 ist durch eine kurze, radial angeordnete Mitnahmekante 22 und eine längere Gleitkante 23 begrenzt, die vom radial inneren Ende der Mitnahmekante 22 bis zum Rand 20 der Vereinzelungskreisscheibe 2 geradlinig verläuft. Die Ausnehmung 21 weist somit ihre größte Tiefe am radial inneren Ende der Mitnahmekante 22 auf. Die beiden Kanten 22, 23 schließen vorzugsweise einen rechten Winkel ein.

Die Vereinzelungskreisscheibe 2 ist derart zwischen den Schienenstegen 3, 4 angeordnet, daß bei der Drehung in Drehrichtung 31 die Kante 23 der Mitnahmekante 22 voreilt. Zweckmäßigerweise ist die Scheibe 2 und/oder die Scheibeneinrichtung 2, 15, 16 einfach auswechselbar angeordnet.

Nachfolgend wird die Funktionsweise der erfindungsgemäßen Vereinzelungsvorrichtung erläutert.

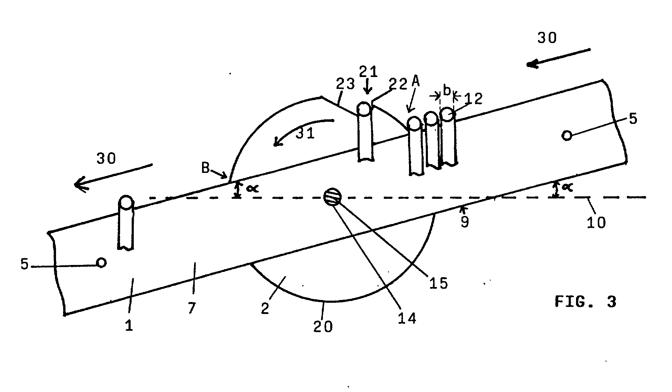

Die Haken 12 gleiten mit dem daran hängenden Gut auf der geneigten Schiene 1 in Transportrichtung 30 abwärts, bis sie gegen den Rand 20 der Vereinzelungskreisscheibe 2 stoßen. Gegen den in Förderrichtung 30 jeweils rückseitigen Rand 20 der Vereinzelungskreisscheibe 2 können sich mehrere Haken 12 aufstauen (bei A in Fig. 3). Die Vereinzelungskreisscheibe 2 wird von einem Motor (nicht dargestellt) in Drehbewegung versetzt. Der Motor greift am Antriebszahnrad 16 an und treibt die Vereinzelungskreisscheibe 2 in Drehrichtung 31 derart an, daß die Ausnehmung 21 der Vereinzelungskreisscheibe 2 im Bereich oberhalb der Längskanten 8 in Transportrichtung 30 bewegt wird.

Wenn die Gleitkante 23 der Ausnehmung 21 die Längskanten 8 von unten kommend überfährt, rutscht der erste Haken 12 der aufgestauten Haken - bei A in Fig. 3 - gegen die Gleitkante 23 und gleitet zusammen mit den anderen Haken ein Stück in Förderrichtung 30, bis die Mitnahmekante 22 ihn erfaßt und in Drehrichtung 31 anhebt und mitnimmt. Die Länge der Mitnahmekante 22 ist so bemessen, daß lediglich ein einzelner Haken 12 erfaßt und von den übrigen aufgestauten Haken getrennt bzw. vereinzelt werden kann. Die Länge der Mitnahmekante 22 entspricht im dargestellten Beispiel der Breite bzw. dem Durchmesser des Steges, aus dem der Haken 12 ausgebildet ist. Nach der Erfindung ist dies nicht erforderlich. Die Erfindung sieht vor, daß die Kante 22 maximal der Breite b eines Bügels mit der geringsten zu erwartenden Breite entsprechen soll. Diese Forderung ist z. B. erfüllt, wenn die Kante 22 auf einen Haken abgestellt ist, der aus Draht üblicher Dicke hergestellt ist. Dickere Haken aus Draht oder Kunststoff können problemlos ebenso vereinzelt werden. Erst wenn eine kritische Dicke überschritten wird, ist die Scheibe 2 gegen eine mit einer tieferen Ausnehmung 21 auszutauschen, was ebenfalls einfach und problemlos ist.

Bevor die einen Haken 12 mitnehmende Ausnehmung 21 die oberen Längskanten 8 in Transportrichtung 30 hinter der Vereinzelungskreisscheibe 2 - bei B in Fig. 3 - mit der Mitnahmekante 22 überfährt, fällt bzw. gleitet der Haken 12 aus der Ausnehmung 21 entlang der Gleitkante 23 auf die oberen Längskanten 8 der Schiene 1 und gleitet einzeln weiter.

Die Länge c der Gleitkante 23 entspricht vorzugsweise etwa dem halben Radius r der Vereinzelungskreisscheibe 2 und dem Bereich von 1/3 r bis r.

Je tiefer die Ausnehmung 21 bzw. je länger die Mitnahmekante 22 ist, desto länger ist die Gleitkante 23, wenn der rechte Winkel β zwischen der radial angeordneten Mitnahmekante 22 und der Gleitkante 23 beibehalten wird.

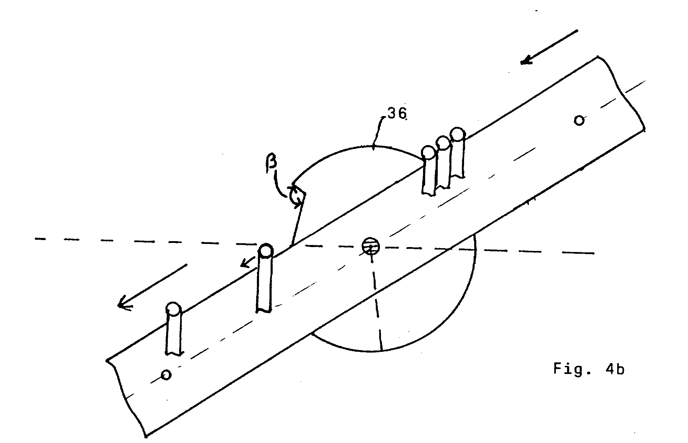

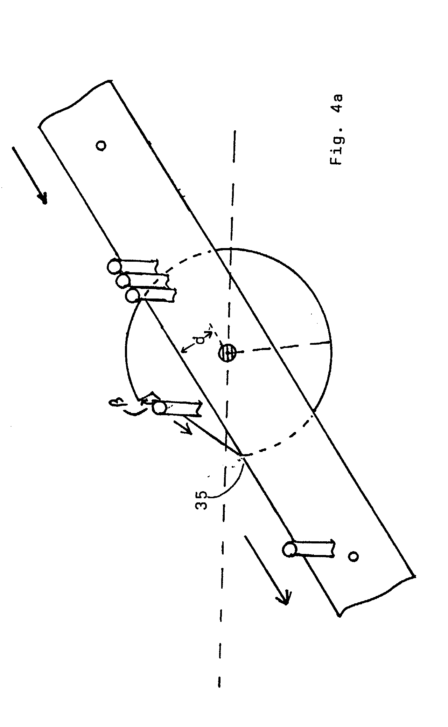

Die Gleitkante 23 kann mit der Mitnahmekante 22 auch einen Winkel β von beispielsweise 110° einschließen (Fig. 4a, 4b), so daß sich deren Länge c gegenüber einer im rechten Winkel zur Mitnahmekante 22 angeordneten Gleitkante 23 wesentlich verlängert. Je länger die Gleitkante 23 ist, desto eher überfährt die Ausnehmung 21 mit dem vorderen Endbereich der Gleitkante 23 die oberen Längskanten 8 in Transportrichtung 30 hinter der Vereinzelungskreisscheibe 2 - bei B in Fig. 4a, 4b und desto steiler ist die Gleitkante 23 beim Überfahren der oberen Längskanten 8 der Schiene 1 angeordnet. Durch die steile Anordnung der Gleitkante 23 beim Überfahren der Längskanten 8 können die Haken 12 mit fast maximaler Schwerkraftsbeschleunigung aus der Ausnehmung 21 herausfallen und auf der Schiene 1 gleiten.

Eine lange Gleitkante 23 bedingt jedoch auch eine große Ausnehmung 21. Bei einer großen Ausnehmung 21 und einem Winkel β > 90° ist die größte radiale Tiefe der Ausnehmung 21 von der Mitnahmekante 22 entfernt angeordnet, so daß beim Auf- bzw. Mitnehmen eines zu vereinzelnden Hakens 12 - bei A in Fig. 3, 4a, 4b - die aufgestauten Haken 12 in die Ausnehmung 12 gleiten und von dem Bereich maximaler Tiefe der Ausnehmung wieder etwas zurückgedrängt werden müssen, da die maximale Tiefe der Ausnehmung 21 von der Mitnahmekante 22 entfernt angeordnet ist. Das Zurückdrängen entgegen der Förderrichtung 30 der aufgestauten Haken 12 sollte bei einer stark geneigten Schiene 1 (α > 30°) und bei einer großen Anzahl von beispielsweise 20 oder mehreren Haken 12 zweckmäßigerweise auf eine Wegstrecke von maximal der halben Länge der Mitnahmekante 22 begrenzt sein, ansonsten würden erhebliche Kraftmomente auftreten, woraus ein Verschleiß an der Schiene 1 und an der Vereinzelungskreisscheibe 2 resultieren kann.

Es hat sich gezeigt, daß bei einem Winkel β von 90° bis 130° sowohl das Aufnehmen eines Hakens 12 - bei A - als auch das Übergeben des Hakens 12 von der Vereinzelungskreisscheibe 2 auf die Schiene 1 - bei B - problemlos durchführbar ist, wobei bei höherer Drehgeschwindigkeit der Vereinzelungskreisscheibe 2 der Winkel β vorzugsweise größer als 100° gewählt werden sollte, da durch die entsprechend längere Gleitkante 23 und beim Übergeben der Haken 12 an die Schiene 1 entsprechend steiler angeordnete Gleitkante 23 ein schneller Abwurf der Haken von der Vereinzelungskreisscheibe 2 erfolgt.

Bei einer hohen Drehgeschwindigkeit der Vereinzelungskreisscheibe 2 und somit einer hohen Vereinzelungsgeschwindigkeit ist es zweckmäßig, die Schiene stark, d. h. mit einem Winkel α > 30°, vorzugsweise mit einem Winkel α im Bereich von 40° bis 50° zu neigen. Eine stark geneigte Schiene 1 bewirkt, daß ein aus der Ausnehmung 21 herausgefallener Haken 12 schnell in Förderrichtung 30 gleitet und sich aus dem von der Mitnahmekante 22 beschriebenen Flugkreis entfernt. Ein unerwünschtes Klemmen des Hakens 12 zwischen den oberen Längskanten 8 und der Mitnahmekante 22 wird hiermit verhindert.

Eine stark geneigte Schiene 1 bewirkt zudem einen zweiten wesentlichen Vorteil. Die Ausnehmung 21 überfährt die oberen Längskanten 8 in Förderrichtung 30 hinten an der Vereinzelungskreisscheibe 2 mit einer gegenüber der Horizontalen 10 steil angeordneten Gleitkante 23. Je steiler die Schiene 1 geneigt ist, desto steiler ist die Gleitkante 23 beim Überfahren der oberen Längskante 8 geneigt, da die Ausnehmung 21 gegenüber einem oberen Kulminationspunkt 36 bei stärker geneigter Schiene 1 weiter fortbewegt ist bzw. einen größeren Winkelabstand vom Kulminationspunkt 36 aufweist als bei einer horizontal oder nur mit geringer Neigung angeordneten Schiene 1, bis die Ausnehmung mit dem in Drehrichtung voreilenden Endbereich der Gleitkante 23 die oberen Längskanten 8 der Schiene 1 überfährt.

Dieser durch die steile Anordnung der Gleitkante 23 erzielte Effekt kann durch Absenken der oberen Längskanten 8 gegenüber der Vereinzelungskreisscheibe 2 noch verstärkt werden. Die Welle 15 bzw. deren horizontale Längsmittenachse 17 wird hierzu möglichst nahe an der oberen Längskante 8 angeordnet, beispielsweise mit einem Abstand d zwischen den oberen Längskanten und der Längsmittenachse 17 im Bereich zwischen einem Viertel und einer Hälfte der Breite der Schiene 1.

Es hat sich gezeigt, daß die Neigung der Schiene 1 und/oder die Anordnung der Längsmittenachse 17 der Welle 15, die zugleich die Drehachse der Vereinzelungskreisscheibe 2 darstellt, bezüglich der oberen Längskanten 8 vorzugsweise so gewählt werden, daß eine in Förderrichtung 30 hintere Schnittpunkt 35 zwischen dem Rand 20 der Vereinzelungskreisscheibe 2 und den oberen Längskanten 8 der Schiene 1 unterhalb einer Horizontalen 10 angeordnet ist, die durch die Längsmittenachse 17 der Welle 15 verläuft.

Mit einer solchen Anordnung ist es möglich, daß selbst bei Vereinzelungskreisscheiben 2 mit kleinem Durchmesser an der Vereinzelungskreisscheibe 2 aufgestaute Haken 12 mit hoher Vereinzelungsgeschwindigkeit sicher vereinzelt werden.

Mit der erfindungsgemäßen Vereinzelungsvorrichtung kann auf einfachste Art und Weise mit einer kontinuierlichen Drehbewegung der Vereinzelungskreisscheibe 2 aufgestaute Haken 12 vereinzelt werden, wobei bei einer kontinuierlichen, konstanten Drehgeschwindigkeit der Vereinzelungskreisscheibe 2 die vereinzelten Haken 12 in regelmäßigen, gleichen Zeitabständen auf die Schiene 1 für einen Weitertransport gesetzt werden. Die erfindungsgemäße Vereinzelungsvorrichtung bewirkt somit nicht nur eine Vereinzelung von aufgestauten Haken, sondern kann auch die Zuführung der vereinzelten Haken zugleich in geeigneter Weise takten. Dieses ist besonders bei vollautomatischen Weiterbearbeitungsvorrichtungen von Vorteil, die oftmals das zu bearbeitende Gut nur in einer vorbestimmten Zeitintervall aufnehmen können.

Die erfindungsgemäße Vereinzelungsvorrichtung benötigt keine aufwendigen Hebelmechanismen und ist somit im Vergleich zu bekannten Vereinzelungsvorrichtungen einfacher ausgebildet, kostengünstiger herstellbar und wartungsarm. Zudem arbeitet die erfindungsgemäße Vereinzelungsvorrichtung unabhängig von der Hakenform, so daß sie für beliebige Einsatzzwecke zum Vereinzeln von auf Haken hängendem Gut verwendet werden kann.

Die Vereinzelungskreisscheibe 2 ist vorzugsweise aus PTFE (Teflon) oder einem PTFE-beschichteten Material gefertigt, da PTFE einerseits gute Gleiteigenschaften und andererseits eine hervorragende Abriebfestigkeit besitzt. Hierdurch wird die Reibung und der Abrieb zwischen dem unmittelbar an der Vereinzelungskreisscheibe 2 anliegendem Haken 12 und dem Rand 20 der Vereinzelungskreisscheibe gering gehalten.

Die Erfindung ist nicht auf das oben beschriebene, bevorzugte Ausführungsbeispiel beschränkt. Im Rahmen der Erfindung liegt beispielsweise auch eine Ausführungsform, bei der in der Vereinzelungskreisscheibe 2 zwei oder mehrere Ausnehmungen 21 eingebracht sind, die vorzugsweise in äquidistanten Winkelabständen angeordnet sind.

Es ist auch möglich, die Schiene 1 aus einem Rohr auszubilden, in das zwei gegenüberliegende Schlitze zur Aufnahme der Vereinzelungskreisscheibe eingebracht sind.

## Patentansprüche

1. Vereinzelungsvorrichtung zum Vereinzeln von auf Haken (12) hängendem Gut, insbesondere zum Vereinzeln von Kleiderbügeln, mit
einer Schiene (1), die eine obere Längskante (8) aufweist, an welche die zu vereinzelnden Haken (12) eingehängt und in Förderrichtung (30) befördert werden können, **gekennzeichnet durch** eine Vereinzelungskreisscheibe (2), die einen Rand (20) und zumindest eine zum Rand (20) hin offene Ausnehmung (21) aufweist, wobei die Vereinzelungskreisscheibe (2) an der Schiene (1) so angeordnet ist, daß sie über die obere Längskante (8) der Schiene (1) vorsteht und um eine quer zur Schiene (1) angeordnete, horizontale Drehachse (17) drehbar gelagert ist, so daß bei einer Drehung der Vereinzelungskreisscheibe (2) ein einzelner Haken (12) von einer Anzahl an dem in Förderrichtung (30) rückseitigen Rand (20) der Vereinzelungskreisscheibe (2) aufgestauter Haken (12) aufgenommen und mitgenommen wird, so daß er von den übrigen aufgestauten Haken (12) getrennt und damit vereinzelt wird.

2. Vereinzelungsvorrichtung nach Anspruch 1, worin die Schiene (1) in Förderrichtung (30) abwärts geneigt ist, so daß die Haken (12) aufgrund der Schwerkraft entlang der Schiene (1) in Förderrichtung (30) gleiten.

3. Vereinzelungsvorrichtung nach Anspruch 2, worin
die obere Längskante (8) der Schiene (1) mit einer Horizontalen (10) einen Neigungswinkel (α) von 10° bis 50° und vorzugsweise von 20° bis 40° einschließt.

4. Vereinzelungsvorrichtung nach einem der Ansprüche 1 bis 3,
**dadurch gekennzeichnet**,
daß die Ausnehmung (21) durch eine radial angeordnete Mitnahmekante (22) und einer zur Mitnahmekante (22) in Drehrichtung (31) der Vereinzelungskreisscheibe (2) voreilenden Gleitkante (23) begrenzt ist.

5. Vereinzelungsvorrichtung nach Anspruch 4,
**dadurch gekennzeichnet**,
daß die Gleitkante (23) der Ausnehmung (21) geradlinig verläuft und einen rechten Winkel mit der Mitnahmekante (22) einschließt.

6. Vereinzelungsvorrichtung nach Anspruch 4,
**dadurch gekennzeichnet**,
daß die Gleitkante (23) und die Mitnahmekante (22) einen Winkel (β) einschließen, der im Bereich von 90° bis 130° liegt und vorzugsweise größer als 110° ist.

7. Vereinzelungsvorrichtung nach einem oder mehreren der Ansprüche 4 bis 6, **dadurch gekennzeichnet**,
daß die Länge (c) der Gleitkante (23) im Bereich von 1/3 r bis r liegt, wobei r der Radius der Vereinzelungskreisscheibe (2) ist.

8. Vereinzelungsvorrichtung nach einem oder mehreren der Ansprüche 1 bis 7, **dadurch gekennzeichnet**,
daß die Schiene (1) aus zwei Schienenstegen (3, 4) besteht, die jeweils aus streifenförmigen, langgestreckten Metallflachstegen ausgebildet und parallel zueinander angeordnet sind.

9. Vereinzelungsvorrichtung nach Anspruch 8,
**dadurch gekennzeichnet,**
daß die Schienenstege (3, 4) jeweils Breitseitenflächen (7) aufweisen, mit welchen sie vertikal angeordnet sind.

10. Vereinzelungsvorrichtung nach Anspruch 8 und/oder 9,
**dadurch gekennzeichnet,**
daß die obere Längskante (8) der Schiene (1) durch jeweils eine obere Längskante (8) der beiden Schienenstege (3, 4) dargestellt wird, die vorzugsweise einen Abstand aufweisen, der so bemessen ist, daß beide Längskanten (8) von einem Haken (12) in Querrichtung übergriffen werden können.

11. Vereinzelungsvorrichtung nach einem oder mehreren der Ansprüche 8 bis 10, **dadurch gekennzeichnet,**
daß in die Schienenstege (3, 4) jeweils ein Loch (14) eingebracht ist, wobei die Löcher (14) zueinander gegenüberliegend angeordnet sind und eine Welle (15) in den Löchern (14) drehbar lagert.

12. Vereinzelungsvorrichtung nach Anspruch 11,
**dadurch gekennzeichnet,**
daß die Welle (15) horizontal angeordnet ist, wobei auf der Welle (15) die Vereinzelungskreisscheibe (2) sitzt, die mittig von der Welle (15) durchgriffen wird und mit dieser drehfest verbunden ist.

13. Vereinzelungsvorrichtung nach Anspruch 11 und/oder 12,
**dadurch gekennzeichnet,**
daß sich die Welle (15) zwischen den beiden Schienenstegen (3, 4) erstreckt und an einem der beiden Schienenstege (4) seitlich etwas vorsteht, wobei an dem seitlich vorstehenden Bereich der Welle (15) ein Antriebszahnrad (16) angebracht ist, an dem ein von einem Motor angetriebenes Zahnrad angreifen und die Welle (15) um deren horizontale Längsmittenachse (17) in Drehbewegung versetzen kann.

14. Vereinzelungsvorrichtung nach einem der Ansprüche 1 bis 13,
**dadurch gekennzeichnet,**
daß die Vereinzelungskreisscheibe aus PTFE oder einem PTFE-beschichteten Material gefertigt ist.

15. Vereinzelungsvorrichtung nach einem oder mehreren der Ansprüche 1 bis 14, **dadurch gekennzeichnet,**
daß die Neigung der Schiene (1) und/oder die Anordnung der Längsmittenachse (17) der Welle (15) bezüglich der oberen Längskanten (8) derart eingerichtet ist, daß ein in Förderrichtung (30) hinterer Schnittpunkt (35) zwischen dem Rand (20) der Vereinzelungskreisscheibe (2) und den oberen Längskanten (8) unterhalb einer Horizontalen (10) angeordnet ist, die durch die Längsmittenachse (17) der Welle (15) verläuft.

16. Verwendung einer Vereinzelungsvorrichtung nach einem oder mehreren der Ansprüche 1 bis 15, **dadurch gekennzeichnet**,
daß die Vereinzelungskreisscheibe (2) mit konstanter Drehgeschwindigkeit gedreht wird.

## Claims

1. Separating device for the separation of articles suspended on hooks (12), in particular for the separation of clothes hangers, with
a rail (1) having an upper longitudinal edge (8) on which the hooks (12) to be separated are suspended and can be moved along a transport direction (30) by a circular separating disc (2) comprising a rim (20) and at least one recess (21) opening onto the said edge (20), such that the circular separating disc (2) is so positioned on the rail (1) that it projects above the upper longitudinal edge (8) of the rail (1) and is mounted to rotate about a horizontal rotation axis (17) transverse to the rail (1), so that each time the circular separating disc (2) rotates, an individual hook (12), one of a number of hooks (12) piled up behind the rim (20) of the circular separating disc (2) as seen in the transport direction (30), is collected and moved forward so that it is separated from the remainder of the waiting hooks (12) and thereby isolated.

2. Separating device according to Claim 1,
in which the rail (1) is inclined downwards in the transport direction (30) so that due to gravity the hooks (12) slide along the rail (1) in the transport direction (30).

3. Separating device according to Claim 2,
in which the upper longitudinal edge (8) of the rail (1) makes an inclination angle (α) of 10° to 50° and preferably 20° to 40° with respect to a horizontal (10).

4. Separating device according to any of Claims 1 to 3,
**characterised in that**
the recess (21) is delimited by a radial collecting edge (22) and a sliding edge (23) leading outwards from the collecting edge (22) in the rotation direction (31) of the circular separating disc (2).

5. Separating device according to Claim 4,
**characterised in that**
the sliding edge (23) of the recess (21) is rectilinear and makes a right-angle with the collecting edge (22).

6. Separating device according to Claim 4,
**characterised in that**
the sliding edge (23) and the collecting edge (22) enclose an angle (β) in the range of 90° to 130° and preferably larger than 110°.

7. Separating device according to one or more of Claims 4 to 6,
**characterised in that**
the length (**c**) of the sliding edge (23) is in the range 1/3**r** to **r**, where **r** is the radius of the circular separating disc (2).

8. Separating device according to one or more of Claims 1 to 7,
**characterised in that**
the rail (1) consists of two rail webs (3, 4), each formed of a flat metal strip extending longitudinally and which are arranged parallel to one another.

9. Separating device according to Claim 8,
**characterised in that**
the rail webs (3, 4) each have wide side surfaces (7) which are arranged vertically.

10. Separating device according to Claims 8 and/or 9,
**characterised in that**
the upper longitudinal edge (8) of the rail (1) is formed by an upper longitudinal edge (8) of the two rail webs (3, 4), which are preferably separated by a distance such that a hook (12) can extend transversely across both longitudinal edges (8).

11. Separating device according to one or more of Claims 8 to 10,
**characterised in that**
a hole (14) is formed in each of the rail webs (3, 4), such that the said holes (14) are positioned opposite one another and a shaft (15) is fitted and can rotate in the holes (14).

12. Separating device according to Claim 11,
**characterised in that**
the shaft (15) is horizontal and the circular separating disc (2) is fitted on it, with the shaft (15) passing through the middle of the disc and being attached to rotate with it.

13. Separating device according to Claims 11 and/or 12,
**characterised in that**
the shaft (15) extends between the two rail webs (3, 4) and projects somewhat beyond one of the two rail webs (4) and a drive gear-wheel (16) is fitted on the part of the shaft (15) projecting sideways, the said gear being engaged by a gear-wheel driven by a motor which can rotate the shaft (15) about its horizontal central longitudinal axis (17).

14. Separating device according to any of Claims 1 to 13,
**characterised in that**
the circular separating disc is made of PTFE or a material coated with PTFE.

15. Separating device according to one or more of Claims 1 to 14
**characterised in that**
the inclination of the rail (1) and/or the arrangement of the central longitudinal axis (17) of the shaft (15) relative to the upper edges (8) is such that an intersection point (35) between the edge (20) of the circular separating disc (2) and the upper edges (8), at the back with respect to the movement direction (30), is positioned below a horizontal (10) passing through the central longitudinal axis (17) of the shaft (15).

16. Utilisation of a separating device according to one or more of Claims 1 to 15,
**characterised in that**
the circular separating disc (2) rotates at constant speed.

## Revendications

1. Dispositif de séparation pour séparer des objets suspendus à des crochets (12), en particulier pour séparer des cintres à vêtements, ce dispositif comportant un rail (1) présentant une arête longitudinale supérieure (8), les crochets à séparer pouvant être accrochés sur ce rail et être transportés dans une direction de transport (30), **caractérisé** par un disque circulaire de séparation (2) qui présente un bord (20) et au moins un évidement (21) ouvert vers ledit bord, le disque circulaire de séparation (2) étant disposé sur le rail (1) de manière à faire saillie par rapport à l'arête longitudinale supérieure (8) du rail (1) et à être monté pour tourner autour d'un axe de rotation horizontal (17) monté transversalement au rail (1) pour que, lors d'une rotation du disque circulaire de séparation (2), un seul crochet (12) parmi une pluralité de crochets (12) accumulés sur le bord (20) reculé dans la direction de transport (30) du disque circulaire de séparation (2) soit saisi et entraîné, ce qui sépare celui-ci des autres crochets (12) accumulés et l'isole ainsi de ceux-ci.

2. Dispositif de séparation selon la revendication 1, dans lequel le rail (1) est incliné vers le bas dans la direction de transport (30), les crochets (12) coulissant ainsi par gravité le long du rail (1) dans la direction de transport (30).

3. Dispositif de séparation selon la revendication 2, dans lequel l'arête longitudinale supérieure (8) du rail (1) forme avec une ligne horizontale (10) an angle d'inclinaison (α) de 10° à 50°, de préférence de 20° à 40°.

4. Dispositif de séparation selon l'une des revendications 1 à 3, **caractérisé** en ce que l'évidement (21) est délimité par une arête d'entraînement (22) disposée radialement, et une arête de coulissement (23) qui précède l'arête d'entraînement (22) dans la direction de rotation (31) du disque circulaire de séparation (2).

5. Dispositif de séparation selon la revendication 4, **caractérisé** en ce que l'arête de coulissement (23) de l'évidement (21) est droite et forme un angle droit avec l'arête d'entraînement (22).

6. Dispositif de séparation selon la revendication 4, **caractérisé** en ce que l'arête de coulissement (23) et l'arête d'entrainement (22) forment un angle (β) situé dans une fourchette de 90° et 130° et de préférence supérieur à 110°.

7. Dispositif de séparation selon l'une ou plusieurs des revendications 4 à 6, **caractérisé** en ce que la longueur (c) de l'arête de coulissement (23) se situe dans une fourchette de 1/3r à r, r étant le rayon du disque circulaire de séparation (2).

8. Dispositif de séparation selon l'une ou plusieurs des revendications 1 à 7, **caractérisé** en ce que le rail (1) comprend deux barres (3, 4) de rail constituées respectivement de barres métalliques plates allongées en forme de bandes disposées en parallèle.

9. Dispositif de séparation selon la revendication 8, **caractérisé** en ce que les barres (3, 4) du rail présentent respectivement des surfaces de côté large ('7) par lesquelles elles sont montées verticalement.

10. Dispositif de séparation selon la revendication 8 et/ou 9, **caractérisé** en ce que l'arête longitudinale supérieure (8) du rail (1) est respectivement constituée par une arête longitudinale supérieure (8) des deux barres (3, 4) séparées de préférence par une distance telle que les deux arêtes longitudinales (8) puissent être chevauchées par un crochet (12) dans la direction transversale.

11. Dispositif de séparation selon l'une ou plusieurs des revendications 8 à 10, **caractérisé** en ce qu'un trou (14) est pratiqué dans chacune des barres (3, 4) du rail, les trous (14) étant disposés en regard l'un de l'autre, un arbre (15) étant monté rotatif dans les trous (14).

12. Dispositif de séparation selon la revendication 11, **caractérisé** en ce que l'arbre (15) est disposé horizontalement, le disque circulaire de séparation (2) étant placé sur l'arbre (15) qui le traverse centralement, et est relié au disque de manière à être solidaire en rotation avec celui-ci.

13. Dispositif de séparation selon la revendication 11 et/ou 12, **caractérisé** en ce que l'arbre (15) s'étend entre les deux barres (3, 4) du rail et fait légèrement saillie sur le côté de l'une des deux barres (4), une roue dentée d'entraînement (16) étant disposée sur la partie latéralement en saillie de l'arbre (15), une roue dentée entraînée par un moteur pouvant engager cette roue dentée et induire l'arbre (15) en rotation autour de son axe central longitudinal horizontal (17).

14. Dispositif de séparation selon l'une ou plusieurs des revendications 1 à 13, **caractérisé** en ce que le disque circulaire de séparation est réalisé en un matériau de PTFE ou revêtu de PTFE.

15. Dispositif de séparation selon l'une ou plusieurs des revendications 1 à 14, **caractérisé** en ce que l'inclinaison du rail (1) et/ou la disposition de l'axe central longitudinal (17) de l'arbre (15) est agencé par rapport aux arêtes longitudinales supérieures (8) de telle façon qu'un point d'intersection reculé (35) dans la direction de transport soit disposé entre le bord (20) du disque circulaire de séparation (2) et les arêtes longitudinales supérieures (8), en dessous d'une ligne horizontale (10) passant par l'axe central longitudinal (17) de l'arbre (15).

16. Utilisation d'un dispositif de séparation selon l'une ou plusieurs des revendications 1 à 15, **caractérisé** en ce qu'on fait tourner le disque circulaire de séparation (2) à vitesse de rotation constante.
